# EUROPÄISCHE PATENTSCHRIFT

(11) **EP 0 942 885 B1**
(45) Veröffentlichungstag und Bekanntmachung des Hinweises auf die Patenterteilung: **05.09.2001**
(21) Anmeldenummer: 97953642.2
(22) Anmeldetag: 09.12.1997
(51) Int. Cl.: B65G 47/38, B65G 17/46, B65G 17/00

(54) **KIPPVORRICHTUNG ZUM ENTLEEREN VON BEHÄLTERN FÜR STÜCKGUT**
TIPPING DEVICE FOR EMPTYING CONTAINERS FOR PIECE GOODS
DISPOSITIF A BASCULE POUR VIDER DES CONTENANTS DESTINES A DES COLIS DE DETAIL

(30) Priorität: 09.12.1996 DE 19652421; 04.12.1997 DE 19755877
(43) Veröffentlichungstag der Anmeldung: 22.09.1999
(73) Patentinhaber: Atecs Mannesmann AG, 40213 Düsseldorf (DE)
(72) Erfinder: OSTHOLT, Rüdiger, D-58300 Wetter (DE); BECKER, Peter, D-68526 Ladenburg (DE)
(74) Vertreter: Meissner, Peter E., Dipl.-Ing.
(86) Internationale Anmeldenummer: DE9702948
(87) Internationale Veröffentlichungsnummer: WO9825842

(56) Entgegenhaltungen:
- DE-A- 2 151 439
- DE-A- 4 220 117
- DE-A- 4 413 967
- US-A- 5 188 216

## Beschreibung

Die Erfindung betrifft eine Kippvorrichtung zum Entleeren von Behältern für Stückgut, insbesondere für Fluggepäckstücke gemäß dem Oberbegriff des Anspruchs 1.

Eine derartige Kippvorrichtung zum Entleeren von Behältern für Stückgut ist aus der DE 44 13 967 A1 bekannt. Diese Kippvorrichtung besteht im Wesentlichen aus einer Vielzahl von in Förderrichtung hintereinander angeordneten Fahrwerken, die zu einer endlos umlaufenden Kette miteinander verbunden und auf Schienen verfahrbar sind. Im Ausführungsbeispiel sind die Fahrwerke entlang von horizontal und stadionförmig verlegten Fahrschienen verfahrbar. An den Fahrwerken sind jeweils in Förderrichtung gesehen voneinander beabstandet ein Paar von Kipparmen vorgesehen, die um eine in Förderrichtung verlaufende und horizontal ausgerichtete Achse verschwenkbar sind sowie in Förderrichtung gesehen v-förmig zueinander ausgerichtet sind. Die dem Fahrwerk abgewandten Enden der Kipparme sind aufeinander zu und voneinander weg bewegbar, um mit ihren Enden in komplementär ausgesparte Nuten in der Aufstandsfläche der Behälter eingreifen zu können. Hierdurch können die Behälter mit den Kipparmen und somit mit dem Fahrzeug verbunden werden, um in dem Behälter gelagertes Stückgut seitlich auf an den Fahrweg der Fahrwerke angrenzende Abzweigförderer abrutschen zu lassen. Um die Behälter von den umlaufenen Fahrwerken wieder in Richtung einer weiterführenden Förderbahn zu übergeben, werden die Kipparme aufeinander zu bewegt und somit der Behälter von den Fahrwerken gelöst. Anschließend wird der Behälter von der weiterführenden Förderbahn übernommen. Die Koppelungs- und Entkoppelungsbewegung der Kipparme erfolgt über an deren dem Behälter abgewandten Enden angeordnete Führungsrollen, die in in Fahrtrichtung verlaufende Führungsschienen eingreifen und entsprechend ihrem Verlauf eine Bewegung der Kipparme relativ zueinander bedingen. Da die Kipparme in Kopplungsrichtung über eine Feder vorgespannt sind, sind die vorbeschriebenen Führungsschienen nur für den Entkopplungsvorgang vorgesehen. Hierdurch ist es möglich, dass der Behälter über ein seitliches Verschwenken der Kipparme einfach entleert werden kann, ohne dass die Führungsrollen für den Ent- und Kopplungsvorgang im Wege sind.

Aus der DE 42 25 491 C1 ist eine Vorrichtung zum Entleeren von Behältern bekannt, die im Verlauf einer Förderbahn angeordnet ist. Die Behälter dienen vorzugsweise für den Transport von einzelnen Fluggepäckstücken. Die Vorrichtung zum Entleeren besteht im wesentlichen aus mehreren in Förderrichtung hintereinander und mit Abstand zueinander ortsfest angeordneten Kipparmen, die quer zur Förderrichtung sich erstrecken und jeweils in ihrer Mitte um eine in Förderrichtung verlaufende Achse nach beiden Seiten schwenkbar gelagert sind. Des weiteren sind im Bereich der Entleervorrichtung Tragrollen nach Art einer Rollenbahn vorgesehen, die in einer einzigen Reihe in Förderrichtung gesehen hintereinander angeordnet und scheibenförmig sind. Die Ausbildung der Tragrollen und der Unterseite der Behälter mit einem zentralen und in Förderrichtung durchgehenden Schlitz ist so gewählt, daß die von den Tragrollen abgestützten Behälter nach beiden Seiten etwa bis zu 45° auf den Tragrollen kippbar sind. Die Kippbewegung der Behälter, um die von diesen transportierten Gepäckstücke auf seitlich an die Entleervorrichtung angrenzende Abzweigförderer abrutschen zu lassen, erfolgt über die doppelarmigen Kipparme. Hierzu sind an den gegenüberliegenden Enden der Kipparme Führungen in Form von um horizontale Achsen drehbaren Führungsrollen vorgesehen, die in entsprechend an dem Behälter angeordnete Führungsstegen eingreifen, um die Schwenkbewegung der Kipparme auf die Behälter zu übertragen. Die in Förderrichtung hintereinander angeordneten Kipparme weisen einen Abstand zueinander auf, der geringer ist als die Länge der Behälter, damit die Behälter während des Kippvorganges an den in Förderrichtung darauffolgenden Kipparm, der sich in der gleichen Kippstellung befindet, übergeben werden können.

Diese Entleervorrichtung ist für eine Vielzahl von Einsatzfällen geeignet und zeichnet sich durch die ortsfeste Anordnung der Kipparme aus. Die Durchsatzleistung der Entleervorrichtung wird jedoch dadurch begrenzt, daß zwischen den einzelnen zu entleerenden Behältern eine ausreichende Lücke vorhanden sein muß, damit sich die Kipparme aus der verschwenkten Stellung zur Aufnahme des folgenden Behälters wieder in die Horizontallage ausrichten können.

Desweiteren ist aus der deutschen Patentschrift DE 21 51 439 C2 bereits eine im Verlauf einer Förderbahn angeordnete Kippvorrichtung für Stückgut bekannt, die im wesentlichen aus in Förderrichtung verfahrbaren Tragschalen bestehen, die zum Abkippen des Stückguts um eine in Förderrichtung verlaufende Achse zur rechten oder linken Seite schwenkbar sind. Das Stückgut kann somit gezielt auf einen angrenzenden Abzweigförderer übergeben werden. Die Tragschalen sind jeweils über einen Kipparm auf einzelnen Fahrwerken befestigt, die in Förderrichtung hintereinander angeordnet und miteinander verbunden sind. Die Fahrwerke bilden somit eine endlose Kette, die jeweils an den Übergängen zu der angrenzenden Förderbahn um ein Umlenkrad geführt ist und somit endlos umlaufend ausgebildet ist. Für den Kippvorgang wird das Stückgut von der angrenzenden Förderbahn auf die Tragschale des Obertrums der Kette übergeben und entweder in Richtung der Abzweigförderbahn abgekippt oder an die sich an die Kippvorrichtung anschließende Förderbahn für einen Weitertransport übergeben. Die Kippbewegung der Tragschale erfolgt über einen an den Kipparm angreifenden Hebelarm, der sich im wesentlichen vertikal nach unten erstreckt und an seinem dem Kipparm abgewandten Ende eine Führungsrolle aufweist. Die Führungsrolle wird in einer entlang der umlaufenden und stadionförmig ausgebildeten Bewegungsbahn der Fahrwerke der Tragschalen verlaufenden Führungsschiene geführt. Hierdurch ist die Tragschale in ihrer Horizontalstellung verriegelt. Für den Kippvorgang sind im Verlauf der Führungsschiene Weichen angeordnet, um je nach gewünschter Kipprichtung zu der rechten oder linken Seite die Führungsrolle in eine oberhalb oder unterhalb der Führungsschiene angeordnete Kippschiene umzuleiten. Durch die Umleitung der Führungsrolle wird in entsprechender Weise der Hebelarm nach unten gezogen bzw. nach oben geschoben, wodurch die Tragschale nach rechts oder links verkippt wird. Die Umschaltung der Weichenelemente erfolgt über einen doppelt wirkenden Pneumatikzylinder, dessen horizontal gerichtete Bewegung über zwei jeweils mit einer Kulissenführung zusammenwirkenden Rollen in eine Verschwenkung der Weichen in Vertikalrichtung umgesetzt wird.

Diese Kippvorrichtung für Stückgut ist jedoch nur für ein Abkippen eines Stückgutteils auf einen vorgewählten Abzweigförderer geeignet. Eine Verwendung für das gezielte Entleeren von Behältern ist nicht möglich.

Der vorliegenden Erfindung liegt die Aufgabe zugrunde, eine Kippvorrichtung zum Entleeren von Behältern für Stückgut, insbesondere Fluggepäckstücke zu schaffen, die eine optimierte Durchsatzleistung aufweist.

Diese Aufgabe wird bei einer Kippvorrichtung zum Entleeren von Behältern für Stückgut durch die im Anspruch 1 aufgeführten Merkmale gelöst. Vorteilhafte Ausgestaltungen der Erfindung sind in den Unteransprüchen 2 bis 11 angegeben.

Erfindungsgemäß wird durch die in Förderrichtung mitfahrende Ausbildung der Kipparme erreicht, daß mindestens zwei Kipparme einem Behälter während des gesamten Kippvorganges zugeordnet werden und somit auch die Rückstellbewegung des Kipparms in die horizontale Lage zusammen mit dem Behälter stattfindet, wodurch vermieden wird, zusätzliche Zeit für die Rückstellung der Kipparme vorsehen zu müssen. Hierdurch wird die Durchsatzleistung bzw. die Länge der Kippvorrichtung optimiert. Mit einer derartigen Kippvorrichtung sind Durchsatzleistungen von 2500 Behältern pro Stunde erreichbar.

Vorteilhafterweise sind die Kipparme über Fahrwerke in einer Fahrschiene geführt und werden über ein endlos umlaufendes Zugmittel, vorzugsweise eine Kette, angetrieben. Diese Bauform führt zu einer geringen Bauhöhe der Kippvorrichtung.

Als besonders vorteilhafte Befestigungsart der Behälter auf den Kipparmen erweist sich die Anordnung von Permanentmagneten an den Enden der Kipparme sowie eines von der Magnetkraft haltbaren Materials, insbesondere Stahlblech, an der Unterseite des Behälterbodens, wenn der Behälter aus Kunststoff hergestellt ist. Die Verbindung der Permanentmagnete mit dem Behälter kann am Ende der Kippvorrichtung leicht durch die nach unten abkippende Bewegung der Kipparme gelöst werden und der Behälter sicher an die anschließende Förderbahn übergeben werden. Durch die in Förderrichtung gesehen am Anfang und Ende der Kippvorrichtung erfolgende Kippbewegung der Permanentmagnete um eine quer zur Förderrichtung gerichtete Achse in bzw. aus ihrer im wesentlichen horizontalen Lage an den Kipparmen, wird ein sanftes An- und Abkoppeln an und von dem Behälter erreicht. Desweiteren wird durch die scheibenförmige Ausbildung der Haltemittel, wobei eine Scheibenfläche dem anzukoppelnden Behälter zugewandt ist, und die zusätzliche leicht winkelbewegliche Lagerung der Haltemittel an den Kipparmen erreicht, daß ein möglichst vollflächiger Kontakt der Haltemittel mit der Unterseite des Behälters erreicht wird und somit die Behälter sicher auf den Kipparmen und auch während der Kippbewegung gehalten werden.

Auch erweist es sich als vorteilhaft die Fahrwerke mit Laufrollen zu versehen, die auf quer zur Förderrichtung gesehen stadionförmig verlaufenden Fahrschienen abrollen und das Zugmittel mit den daran angeordneten Fahrwerken über zwei im Bereich der Enden der Fahrschienen angeordnete Umlenkräder geführt ist.

Zur Durchführung der Kippbewegung der Behälter ist an jedem Kipparm außerhalb seiner Achse gelenkig ein Hebelarm gelagert, der im wesentlichen vertikal ausgerichtet ist und an seinem dem Kipparm abgewandten Ende eine Führungsrolle aufweist. Diese Führungsrolle greift für ein Halten des Kipparms in seiner horizontalen Transportstellung in eine parallel zur stadionförmigen Fahrschiene verlaufende Führungsschiene ein. Zum Verschwenken der Kipparme sind im Verlauf der Führungsschienen Weichenschienen vorgesehen, die um ein Weichengelenk mit einer quer zur Förderrichtung und horizontal ausgerichteten Achse schwenkbar sind und über die die Führungsrollen von der Führungsschiene in eine vertikal zur Führungsschiene versetzt angeordnete Kippschiene umleitbar sind. Durch die hierdurch auf den Hebelarm einwirkende Zug- bzw. Druckkraft in Vertikalrichtung wird der Kipparm und somit der darauf befestigte Behälter entweder zu der einen oder anderen Seite der Kippvorrichtung verschwenkt. Diese Ausbildung der Kippmechanik erweist sich als konstruktiv sehr einfach, da diese im wesentlichen auf mechanischen Bauteilen basiert. Auch ist die Störanfälligkeit einer derartigen mechanischen Lösung relativ gering.

Als vorteilhafte Ausbildung der Weichenelemente hat sich die Anordnung einer um ein Weichenelement schwenkbaren Weichenschiene im Verlauf der Führungsschiene bewährt. Die Weichenschiene weist hierbei eine Länge auf, die in etwa der Länge eines Behälters entspricht. Hierdurch ist eine relativ sanfte Kippbewegung der Kipparme und somit des Kippbehälters möglich. Die Weichenschiene ist aus ihrer horizontalen Ruhestellung in ihre Betriebsstellung über einen Antrieb verschwenkbar. In der Betriebsstellung verbindet die Weichenschiene die Führungsschiene mit einer dieser zugeordneten Kippschiene.

Als Antrieb für die Verschwenkbewegung der Weichenschiene hat sich die Verwendung eines ebenen Kurvengetriebes mit Schub- und Drehgelenken nach Art eines Malteserkreuzes als vorteilhaft erwiesen, da hierdurch gewährleistet ist, daß in der Ruhestellung und auch der Betriebsstellung der Kippschiene der vorzugsweise als Elektromotor mit vorgeschaltetem Getriebe ausgebildete Antrieb nicht auf Drehung beansprucht wird und die Stützkräfte der Weichenschiene direkt in die Abtriebswelle des Getriebes eingeleitet werden. Das Kurvengetriebe erweist sich somit als selbsthemmend.

Dieses Kurvengetriebe ist durch eine auf der Abtriebswelle angeordnete Stiftscheibe verwirklicht, die im wesentlichen aus einem versetzt zur Abtriebswelle angeordneten Stift besteht, der in einen Schlitz einer koaxial zur Stiftscheibe drehbaren Schlitzscheibe eingreift. An dem dem Schlitz gegenüberliegenden Ende der Schlitzscheibe ist eine Verbindungsstange gelenkig gelagert, die mit der Weichenschiene verbunden ist und die Aufgabe hat, die Drehbewegung der Schlitzscheibe in eine Hub- oder Senkbewegung der Weichenschiene umzusetzen. Damit die zuvor beschriebene Selbsthemmung des Kurvengetriebes möglich ist, sind an der Stiftscheibe und an der Schlitzscheibe bogenförmige Anlageflächen vorgesehen, die in der Betriebs- und Ruhestellung der Stift- und Schlitzscheibe aneinanderliegen und somit den Stift entlasten. Zwischen den beiden Stellungen ist die Stiftscheibe um 90° schwenkbar und in beiden Schwenkstellungen der Stiftscheibe ist jeweils der Schlitz mit seiner Längserstreckung tangential zur Welle der Stiftscheibe und mit Abstand zu dieser Welle angeordnet.

Darüberhinaus erweist es sich als vorteilhaft einen doppelten Satz von Führungsschienen und Kippschienen vorzusehen, die in Förderrichtung gesehen sich auf der rechten und linken Seite unterhalb der Fahrschienen befinden. Hierdurch ist es möglich, am Beginn der Fahrschienen der Kippvorrichtung jeweils ein Weichenelement auf der linken Seite und ein weiteres Weichenelement in Fahrtrichtung kurz darauf folgend auf der rechten Seite vorzusehen. Der Abstand der Weichenelemente entspricht dem Abstand der aufeinanderfolgenden Kipparme, die jeweils gemeinsam einen Behälter tragen, wodurch deren gleichzeitige Verschwenkung möglich ist. Durch die seitlich versetzte Anordnung der Weichenelemente ist es möglich, die Geschwindigkeit der Fahrwerke zu erhöhen, da die Abstände zwischen den einzelnen Führungsrollen auf einer Seite der Führungs- und Kippschienen verdoppelt ist und somit ausreichend Zeit verbleibt auch bei höheren Fördergeschwindigkeiten, die Weichenschienen vor Eintreffen der nächsten Führungsrolle in die gewünschte Position zu schalten. Hierfür sind die Kipparme auf den Fahrwerken jeweils um 180° verdreht angeordnet und in Förderrichtung gesehen sind die Führungsrollen jeweils abwechselnd in die rechten oder linken Schienen eingreifend vorgesehen.

Nachfolgend wird die Erfindung anhand eines Ausführungsbeispieles näher erläutert. Es zeigen:
- Fig. 1: eine Seitenansicht einer im Verlauf eines Gurtförderers angeordneten erfindungsgemäßen Kippvorrichtung für Behälter,
- Fig. 2: eine Schnittansicht von Fig. 1, entlang der Schnittlinie II - II,
- Fig. 3: eine Ausschnittvergrößerung von Fig. 2 aus dem Bereich des Kippantriebes, jedoch in Kippstellung des Kipparms,
- Fig. 4: eine Ausschnittsvergrößerung von Fig. 1 aus dem Bereich der Weichenelemente,
- Fig. 5: eine Ausschnittsvergrößerung von Fig. 4 aus dem Bereich eines Antriebs eines Weichenelements und
- Fig. 6: eine Draufsicht auf Fig. 4.

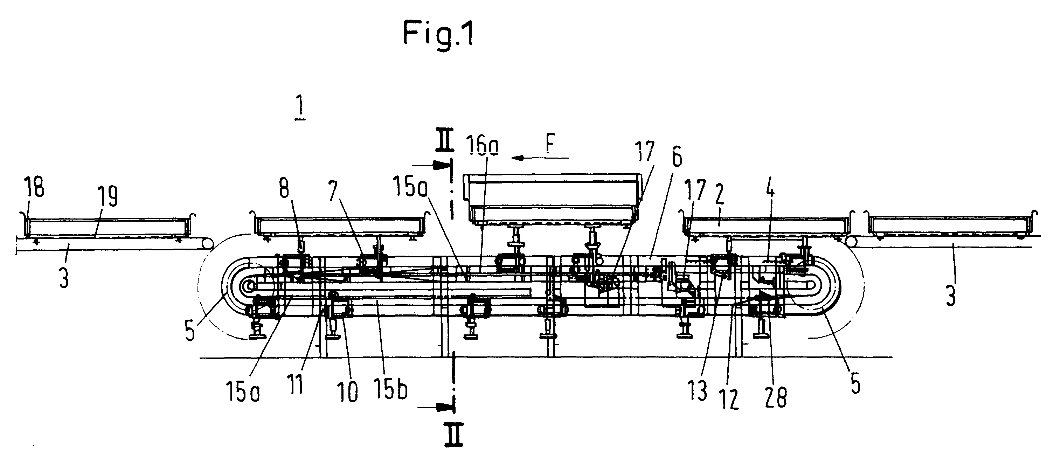

In Fig. 1 ist eine Seitenansicht einer erfindungsgemäßen Kippvorrichtung 1 für die Entleerung von Behältern 2, insbesondere Transportbehälter für Fluggepäckstücke, dargestellt. Die Kippvorrichtung 1 ist im Verlauf einer Förderbahn 3 angeordnet, die vorzugsweise als Gurtbandförderer ausgebildet ist, auf dem die Transportbehälter seitlich von je einem Gurtband abgetragen werden. Die Förderbahn 3 dient zum Zu- und Abführen der Behälter 2 zu bzw. von der Kippvorrichtung 1. Die Kippvorrichtung 1 hat die Aufgabe, die Behälter 2 einseitig und quer zur Förderrichtung F seitlich zu verschwenken, um das von den Behältern 2 geförderte Transportgut auf nicht dargestellte Abzweigförderer, die vorzugsweise als Rutschen ausgebildet sind, abzugeben.

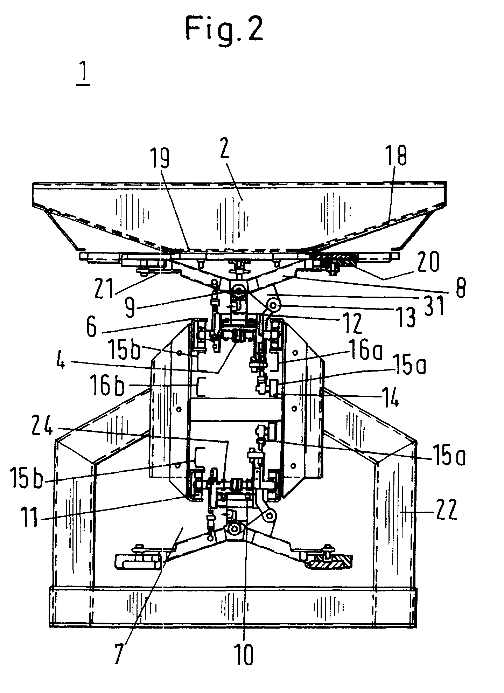

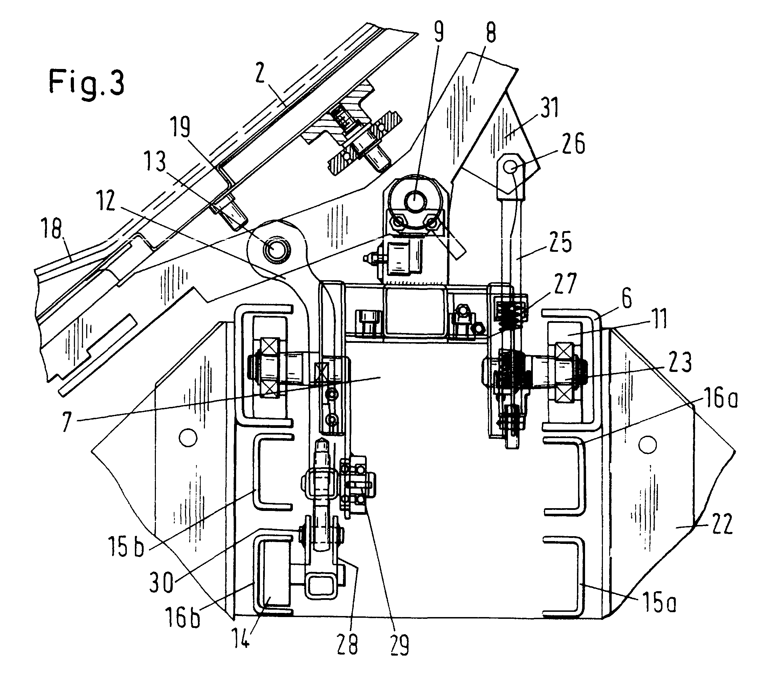

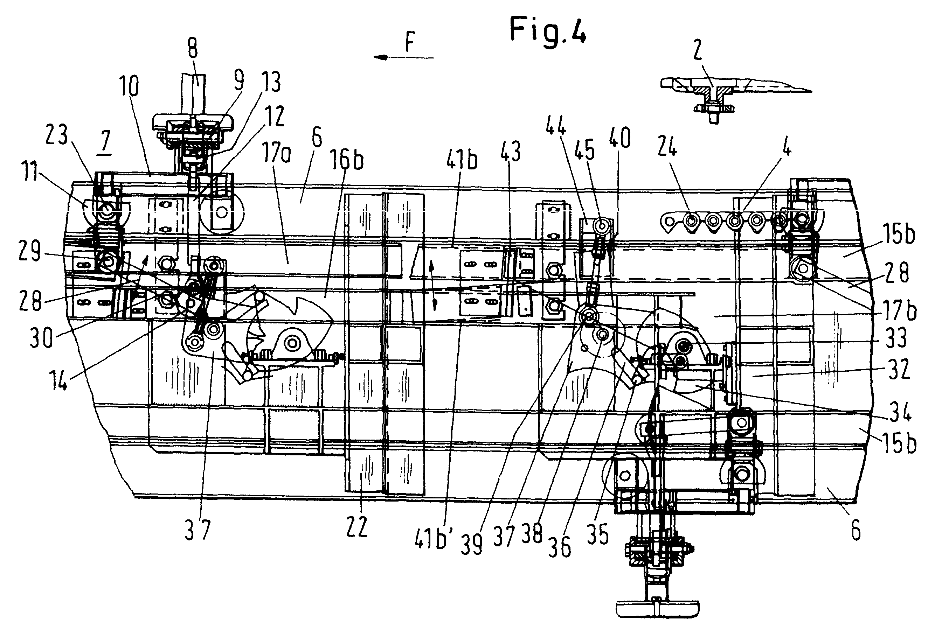

Die Kippvorrichtung 1 besteht im wesentlichen aus einem endlos umlaufenden Zugmittel 4, das am Anfang und am Ende der Kippvorrichtung 1 über Umlenkräder 5, die um horizontale und quer zur Förderrichtung F verlaufende Achsen drehbar gelagert sind, geführt ist. Das nur teilweise dargestellte Zugmittel 4 ist vorzugsweise als Kette ausgebildet und dementsprechend die Umlenkräder 5 als Zahnräder. Zwischen den Umlenkrädern 5 ist das Zugmittel 4 über sich in Förderrichtung F erstreckende und seitlich offene Fahrschienen 6 geführt (s. auch Fig. 3 und Fig. 4), deren Führungsflächen vorzugsweise aus Kunststoff hergestellt sind. An dem Zugmittel 4 sind über Bolzen Fahrwerke 7 befestigt, die somit im Bereich des Obertrums des Zugmittels 4 in Förderrichtung F antreibbar sind. Entlang des Zugmittels 4 sind eine Vielzahl von Fahrwerken 7 angeordnet, deren Abstand zueinander so gewählt ist, daß jeweils zwei in Förderrichtung F aufeinanderfolgende Fahrwerke 7 ein Paar bilden, die jeweils einen Behälter 2 tragen. Jedes Paar ist in Abhängigkeit von der Länge des Behälters 2 unter Einhaltung eines Mindestabstandes zu dem darauffolgenden Behälter 2 voneinander beabstandet. Für den Schwenkvorgang der Behälter 2 ist auf jedem Fahrwerk 7 ein Kipparm 8 befestigt, der um eine in Förderrichtung F sowie horizontal verlaufende Achse 9 (s. Fig 2 und 3) schwenkbar ist.

Das Fahrwerk 7 besteht im wesentlichen aus einem Rahmen 10, auf dem der Kipparm 8 über die Achse 9 gelagert ist. Diese Beschreibung bezieht sich auf ein Fahrwerk 7, das sich in Förderrichtung F im Bereich des Obertrums des Zugmittels 4 bewegt. Des weiteren weist das Fahrwerk 8 vier Laufrollen 11 auf, die in Förderrichtung F gesehen jeweils paarweise hintereinander und somit auch nebeneinander angeordnet sind (siehe auch Figuren 2 und 3). Die Laufrollen 11 rollen in Fahrschienen 6 ab, die entlang des Zugmittels 4 verlaufend an der Kippvorrichtung 1 angeordnet sind. Von der Seite her gesehen hat die Fahrschiene 6 eine stadionförmige Ausbildung, d. h. diese besteht aus zwei parallel gegenüberliegenden geraden Schienen, deren Enden über jeweils eine halbkreisförmige Schiene miteinander verbunden sind.

Die Kippbewegung der Kipparme 8 erfolgt über eine Koppelstange 12 der über eine in Fahrtrichtung F verlaufende Achse 13 (siehe Figuren 2 und 3) eines Gelenkopfes schwenkbar an dem Kipparm 8 gelagert ist und sich im wesentlichen vertikal nach unten erstreckt. An dem dem Kipparm 8 abgewandten Ende der Koppelstange 12 ist eine Führungsrolle 14 angeordnet, die in eine parallel zu der Fahrschiene 6 somit ebenfalls stadionförmig verlaufende Führungsschiene 15a, 15b eingreift. Um die Kipparme 8 aus ihrer horizontalen Transportstellung in ihre Kippstellung zu bewegen, sind parallel zu den Führungsschienen 15a, 15b und ober- bzw. unterhalb dieser verlaufende Kippschienen 16a, 16b vorgesehen. Die Führungsschienen 15a, 15b und die Kippschienen 16a, 16b sind über Weichenelemente 17a, 17b miteinander verbunden. Durch Umschaltung der Weichenelemente 17a, 17b ist somit eine Einleitung der Schwenkbewegung der Kipparme 8 möglich, da durch die Umleitung der Führungsrolle 14 von der Führungsschiene 15a, 15b auf die zugeordnete Kippschiene 16 der Koppelstange 12 entweder nach oben geschoben oder nach unten gezogen wird und somit der Kipparm 8 verschwenkt wird.

Die Fig. 2 zeigt eine vergrößerte Schnittansicht von Fig. 1 entlang der Schnittlinie II - II, der u. a. die Ausbildung der Behälter 2 zu entnehmen ist. Diese Behälter 2 eignen sich besonders, um das transportierte Fördergut in Form von Koffern, Rucksäcken oder Taschen durch Kippen um etwa 45° auszuschleusen. Unter wannenförmig ist hierbei zu verstehen, daß die Behälter 2 quer zur Förderrichtung F augerichtete Seitenwände 18 aufweisen, die nahezu senkrecht zum Boden 19 des Behälters 2 ausgerichtet sind, um das Fördergut während des Transportes der Behälter 2 auf den Förderbahnen 3 in Steigungs-, Gefälle- und Kurvenstrecken am Verlassen des Behälters 2 zu hindern. Im vorliegenden Ausführungsbeispiel sind die in Förderrichtung F ausgerichteten inneren Seitenwände 18 des Behälters 2 in etwa mit einem Winkel von 20° zu dem Boden 19 angeordnet. Diese schräge Ausbildung der Seitenwand 19 begünstigt beim Kippen des Behälters 2 ein Herausrutschen des Fördergutes auf die angrenzende Abzweigbahn.

Die Behälter 2 sind während der Transportbewegung in Förderrichtung F auf der Kippvorrichtung 1 über Haltemittel 20 mit dem Kipparm 8 verriegelt. Gleichzeitig ruht der Behälter 2 mit seinem Boden 19 auf dem Kipparm 8. Die Haltemittel 20 sind vorzugsweise als Permanentmagnete ausgebildet und dementsprechend der vorzugsweise aus Kunststoff hergestellte Behälter im Bereich der Außenseite seines Bodens 19 mit einem Blechprofil versehen, das darüber hinaus dem Schutz des aus Kunststoff hergestellten Behälters 2 dient.

Es ist auch möglich, die Haltemittel 20 als mechanische Verriegelung auszubilden und entsprechende Aussparungen an dem Behälter 2 vorzusehen oder Elektromagnete zu verwenden.

Desweiteren ist der Fig. 2 zu entnehmen, daß die Fahrschienen 6 für die Fahrwerke 7 aus zwei U-Profilen gebildet sind, die aufrechtstehend und mit ihren offenen Seiten einander zugewandt und seitlich mit ihrer Außenseite des Flansches an einem Tragrahmen 23 angeordnet sind. Jeweils auf dem unteren Steg der U-profilförmigen Fahrschienen 6 rollen die Laufrollen 11 der Fahrwerke 7 ab. Der Durchmesser der Laufrollen 11 ist so gewählt, daß bei auf dem unteren Steg der Fahrschiene 6 ruhenden Laufrollen 11 ein geringer Abstand zu dem oberen Steg der Fahrschiene 6 verbleibt. Hierdurch ist einerseits möglich, daß die Laufrollen 11 klemmungsfrei in der Fahrschiene 6 verfahren können und andererseits das durch die seitliche Verlagerung des Behälters 2 während des Kippvorgangs das auf das Fahrwerk 7 aufgebrachte Kippmoment von diesen aufgenommen werden kann, indem das dem auskragenden Teil des Kipparms 8 abgewandte Laufrolle 11 von dem unteren Steg der Fahrschiene 6 abhebt und sich unmittelbar anschließend an den oberen Steg der Fahrschiene 6 anlegt. Hierdurch werden die aus dem Kippmoment resultierenden Kräfte sicher in die Fahrschiene 6 und den Tragrahmen eingeleitet. Die nebeneinanderliegenden Laufrollen 11 des Fahrwerks 7 sind jeweils an koaxial zueinander angeordneten Abschnitten einer Laufachse 23 gelagert, die zwischen den Laufrollen 11 mit dem Rahmen 10 des Fahrwerks 7 verbunden ist. Der Rahmen 10 ist mittels sich in Richtung des Tragrahmen 22 sowie - in bezug auf das obere Fahrwerk 7 gesehen - nach unten erstreckende Mitnehmerelemente mit Bolzen 24 dem Zugmittel 4 verbunden. Für den Fall, daß das Zugmittel 4 als Zahnkette ausgebildet ist, handelt es sich bei dem Bolzen 24 um die jeweils seitlich verlängerten Bolzen für die Kettenlaschen.

Der Kipparm 8 besteht im wesentlichen aus einem sich quer zur Förderrichtung F erstreckenden Profil, das in der Mitte seiner Längserstreckung an einer in Förderrichtung F verlaufenden Achse 9 und somit auf dem Rahmen 10 des Fahrwerks 7 gelagert ist. An den Enden des Kipparms 8 und in Verlängerung desselben sind jeweils die Haltemittel 20 angeordnet. Die als Permanentmagnete ausgebildeten Haltemittel 20 sind über begrenzt flexible Verbindungselemente 21, insbesondere Blechstreifen, mit dem Kipparm 8 verbunden. Durch die flexible Befestigung ist es möglich, daß die Oberfläche des Haltemittels 20 sich vollflächig an die Unterseite des Bodens 19 des Behälters 2 anlegen kann. Hierdurch wird die Haltekraft des Haltemittels 20 optimiert. Es ist auch möglich die Magnete in einem topfförmigen Kunststoffelement zu lagern und dieses fest mit dem Kipparm 8 oder die Haltemittel 20 direkt mit dem Kipparm 8 zu verbinden.

Desweiteren ist der Figur 2 die Anordnung der Führungsschienen 15a, 15b und der Kippschienen 16a, 16b zu entnehmen. Es ist ersichtlich, daß in Förderrichtung F gesehen im Bereich des Obertrums des Zugmittels 4 jeweils unterhalb der Fahrschienen 6 jeweils ein Paar Führungsschienen 15a, 15b mit Kippschienen 16a, 16b vorgesehen ist. Im Bereich des Untertrums des Zugmittels 4 ist je Seite der Kippvorrichtung 11 nur eine Führungsschiene 15a, 15b und keine Kippschiene 16a, 16b angeordnet. In der Figur 2 ist ein Fahrwerk 7 mit einem Kipparm 8 dargestellt, dessen Koppelstange 12 über seine Führungsrolle 14 in die in Förderrichtung F gesehen auf der rechten Seite angeordneten Führungsschiene 15a und bei Bedarf in dessen zugeordnete Kippschiene 16a eingreift. Das in Förderrichtung F folgende Fahrwerk 7 mit dem Kipparm 8 ist spiegelbildlich zu dem in Figur 2 dargestellten Fahrwerk 7 angeordnet, wobei beide Kipparme 8 ein Paar bilden, um einen Behälter zu tragen, so daß die Koppelstange 12 an der linken Seite des als Doppelarm ausgebildeten Kipparms 8 über seine Achse 13 angelenkt ist. Dieses andere Fahrwerk 7 des Paares ist in verschwenkter Kippstellung in der Figur 3 dargestellt.

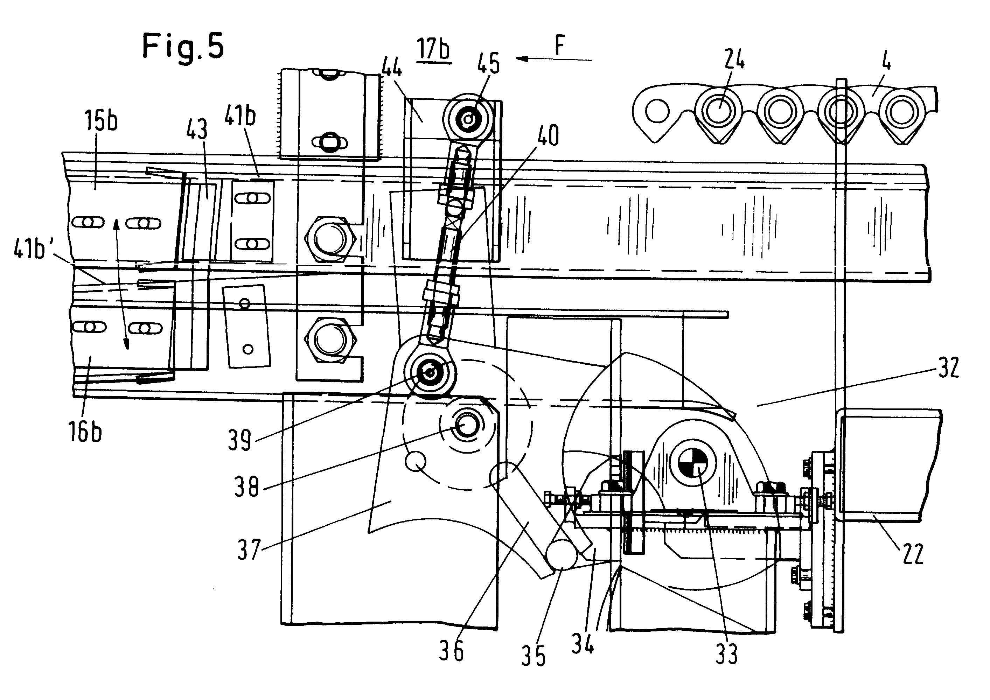

Für die gemeinsame Schwenkbewegung der beiden Kipparme 8, die jeweils gemeinsam einen Behälter 2 tragen, ist der in Förderrichtung F vordere Kipparm 8 dadurch schwenkbar, daß die Führungsrolle 14 aus der unteren bzw. inneren Führungsschiene 15 auf der rechten Seite über ein Weichenelement 17a (siehe Figuren 4 und 5) in die zwischen der Führungsschiene 15a und der Fahrschiene 6 angeordnete Kippschiene 16a umgelenkt wird. Hierdurch wird die Koppelstange 12 in Vertikalrichtung nach oben bewegt und der Kipparm 8 um etwa 45° um die Achse 9 nach links verschwenkt.

Da im Bereich des Untertrums des Zugmittels 4 keine Verschwenkung der Kipparme 8 erforderlich ist, ist nur eine Führungsschiene 15a auf der rechten Seite und eine Führungsschiene 15 auf der linken Seite nach oben versetzt angeordnet.

Im Vergleich mit der Figur 3, die eine Ausschnittsvergrößerung von Figur 2 aus dem Bereich des Kippantriebes jedoch für das in Förderrichtung F gesehen hintere Fahrwerk 7 mit einem Kipparm 8 des Paares von Kipparmen 8 zeigt, ist ersichtlich, daß die auf der in Förderrichtung F gesehen linken Seite angeordnete Führungsschiene 15b und Kippschiene 16b gegenüber der rechten Seite miteinander vertauscht sind. Die Kippschiene 16b befindet sich somit unterhalb der Führungsschiene 15b. Diese Anordnung ist auch der Figur 2 zu entnehmen, wo im Bereich des Untertrums des Zugmittels 4 zu sehen ist, daß die Führungsschiene 15b auf der linken Seiten im Nachbarbereich und nahezu angrenzend an die Fahrschiene 6 angeordnet ist und die Führungsschiene 15 auf der rechten Seite in Vertikalrichtung um etwa die Höhe einer Kippschiene 16 zuzüglich eines Spaltes von der Oberseite der unteren Fahrschiene 6 nach oben versetzt ist.

Ferner ist der Figur 3 zu entnehmen, daß auf der Seite des als Doppelarm ausgebildeten Kipparms 8, die der Koppelstange 12 abgewandt ist, eine Zugstange 25 um eine in Förderrichtung F verlaufende Achse 26 schwenkbar gelagert ist. Die Zugstange 25 ist in allen Stellungen des Kipparms 8 im wesentlichen vertikal ausgerichtet und stützt sich an dem dem Kipparm 8 abgewandten Ende über ein Federelement 27 an dem Rahmen 10 des Fahrwerkes 7 ab. Dieses Federelement 27 hat die Aufgabe den Kipparm 8 gegenüber dem Rahmen 10 des Fahrwerkes 7 vorzuspannen, so daß einerseits in der horizontalen Transportstellung und auch in der schrägen Kippstellung die Führungsrolle 14 jeweils an dem oberen Flansch der u-förmig ausgebildeten und seitlich offenen Führungsschiene 15a, 15b oder Kippschiene 16a, 16b abläuft. Hierdurch wird der Kipparm 8 während des gesamten Kippvorganges und auch bei der Rückführung im Bereich des Untertrums des Zugmittels 4 stabilisiert.

Femer zeigt die Figur 3, daß die Führungsrolle 14 über einen Schlepparm 28 mit dem dem Kipparm 8 abgewandten Ende der Koppelstange 12 über eine Achse 29 verbunden ist. Dieser Schlepparm 28 ist ebenfalls in Seitenansicht der Figur 4 zu entnehmen. Die Achse 29 ist quer zur Förderrichtung F und horizontal ausgerichtet. Bezüglich der Lagerung der Koppelstange 12 an dem Schlepparm 28 ist den Figuren 3 und 4 zu entnehmen, daß diese über eine quer zur Förderrichtung F ausgerichtete Achse 30 erfolgt. Die Achsen 13 und 30 sind jeweils Bestandteile von Kugelgelenken, um die auftretenden Versetzungen während der raumförmigen Bewegung des Kipparms 8 während des Kippvorgangs auszugleichen. Durch die Verbindung der Führungsrolle 14 über den Schlepparm 28 mit dem Rahmen 10 und das Angreifen der Koppekstange 12 an dem Schlepparm 28 oberhalb der Lagerung der Führungsrolle 14 wird erreicht, daß auf eine zusätzliche Führung der Koppelstange 12 in Vertikalrichtung verzichtet werden kann. Durch die Anlenkung des Schlepparms 28 in Förderrichtung F gesehen vorne an dem Rahmen 10 wird die Führungsrolle 14 und der Schlepparm 28 hinter dem Fahrwerk 7 hergezogen. Diese Art Bewegung der Führungsrolle 14 in der Führungsschiene 15 und der Kippschiene 16 erhöht die Stabilität der Gelenkverbindung des Schlepparms 28 und der Koppelstange 12 untereinander.

Außerdem ist durch einen Vergleich der Figuren 2 und 3 ersichtlich, daß an einer Hebelseite des Kipparms 8 zusätzlich ein Verbindungsblech 31 angeordnet ist, über das entweder die Zugstange 25 oder die Koppelstange 12 mit dem Kipparm 8 verbunden ist, je nachdem, ob es sich jeweils um den vorderen oder hinteren Kipparm 8 des Paares von Kipparmen 8 für den Transport eines Behälters 2 handelt. Hierdurch wird erreicht, daß obwohl auf den beiden gegenüberliegenden Seiten die Führungsschiene 15a, 15b und die Kippschiene 16a, 16b in Vertikalrichtung gegeneinander vertauscht und somit vertikal versetzt sind, identisch ausgebildete Koppelstangen 12 verwendet werden können.

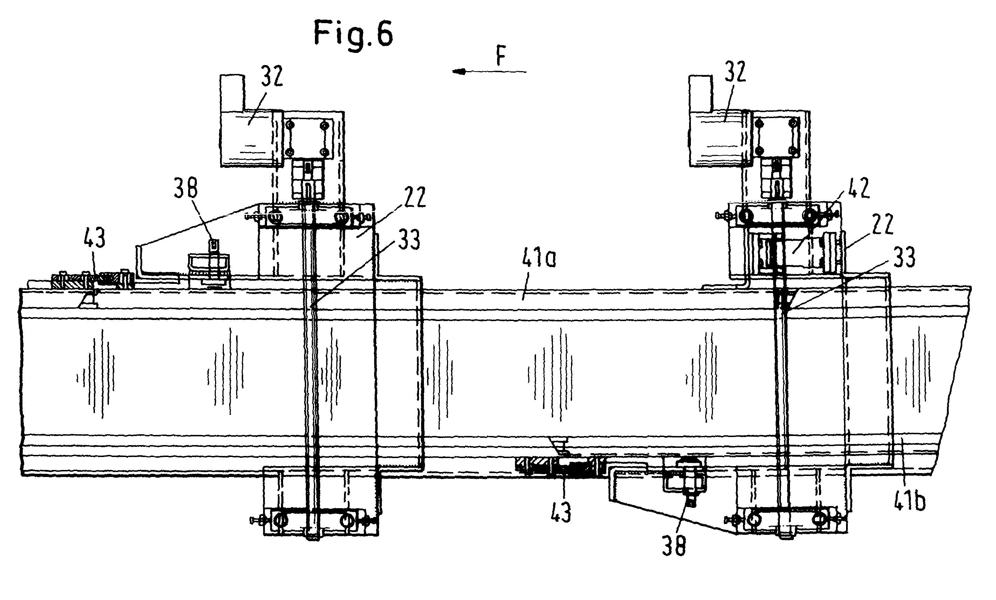

Die Figur 4 zeigt eine Auschnittsvergrößerung von Figur 1 aus dem Bereich der beiden in Förderrichtung F aufeinanderfolgenden Weichenelemente 17a und 17b, die im wesentlichen aus einem Antrieb 32 (siehe Figur 6) und einem ebenen Kurvengetriebe mit Dreh- und Schubgelenken nach Art eines Malteserkreuzes besteht. Der Antrieb 32 besteht aus einem Elektromotor mit einem vorgeschalteten Getriebe. Der Antrieb 32 ist an dem Tragrahmen 22 der Kippvorrichtung 1 gelagert und abtriebsseitig über eine quer und horizontal zur Förderrichtung F ausgerichtete Welle 33 mit einer hierauf gelagerten Stiftscheibe 34 verbunden. Die Stiftscheibe 34 hat die Funktion eines an der Welle 33 einseitig gelagerten Hebelarms, dessen der Welle 33 abgewandtes Ende mit einem Stift 35 versehen ist, der koaxial zur Welle 33 ausgerichtet ist. Vorzugsweise ist der Stift 35 mit einer Rolle versehen. Der Stift 35 greift in einen einseitig offenen und langlochförmigen Schlitz 36 einer Schlitzscheibe 37 ein, die um eine koaxial zur Welle 33 der Stiftscheibe 34 ausgerichtete weitere Welle 38 drehbar gelagert ist. Die Schlitzscheibe 37 ist in erster Näherung quadratisch ausgebildet, exzentrisch an der Welle 38 gelagert und weist zwei konkave Anlageflächen 37' auf zur Selbsthemmung des Kurvengetriebes in seinen Endstellungen. Funktionsmäßig ist die Schlitzscheibe 37 als Doppelhebel ausgebildet, wobei an dem einem Hebelarm der Schlitz 36 angeordnet ist, dessen gedachte Verlängerung seiner Längserstreckung die Welle 38 zentrisch schneidet. An dem gegenüberliegenden Hebelarm der Schlitzscheibe 37 und somit auf der dem Schlitz 36 gegenüberliegenden Seite ist über eine koaxial zur Welle 38 ausgerichtete Achse 39 eine Verbindungsstange 40 gelagert, dessen der Achse 39 abgewandtes Ende über eine weitere parallel zur Achse 35 ausgerichtete Achse 45 an einer Weichenschiene 41 befestigt ist. Die Stift-Schlitz Verbindung dient zur Verschwenkung der Weichenschiene 42; die Festlegung der Weichenschiene 42 in den Endstellungen erfolgt über die Anlageflächen 34', 37'.

Diese Weichenschiene 41 weist eine sich in Förderrichtung F erstreckende Länge auf, die etwa im Bereich der Länge eines Behälters 2 liegt, und ist über ein Weichengelenk 42 aus ihrer Ruhestellung, in der diese im Verlauf der Führungsschiene 15b angeordnet ist, in seine Betriebsstellung verschwenkbar. In der Betriebsstellung verbindet die Weichenschiene 41b die Führungsschiene 15b mit der Kippschiene 16b und ist in Förderrichtung F gesehen mit Gefälle angeordnet. Das Weichengelenk 42 für die Weichenschiene 41b ist in Figur 4 nicht dargestellt, da dieses durch die Länge der Weichenschiene 41 b, wodurch eine sanfte Kippbewegung der Behälter 2 erreicht wird, außerhalb des rechten Randes der Zeichnung liegt. Das Weichengelenk 42 für die Weichenschiene 41a ist jedoch in der Draufsicht von Figur 4 in Figur 6 zu entnehmen. Die Weichenschiene 41 ist in dem Ausführungsbeispiel zweiteilig ausgebildet, um deren Länge zu verringern. Ein erster Teil ist mit dem Weichengelenk 42 verbunden und ein zweiter Teil 41a stationär an dem Anfang der Kippschiene 16b befestigt. Der zweite Teil 41b ist entsprechend der Ausrichtung des ersten Teils in der Betriebsstellung winklig zur Kippschiene 16 ausgerichtet.

In der Figur 4 ist die Weichenschiene 41b in ihrer horizontal verlaufenden Ruhestellung dargestellt; die Betriebsstellung der Weichenschiene 41b ist nur durch das eingezeichnete feststehende Ende 41b' angedeutet. Desweiteren ist der Figur 4 zu entnehmen, daß die Weichenschiene 41b neben dem Weichengelenk 42 auch an seinem dem Weichengelenk 42 abgewandten und somit in Förderichtung F vorderen Ende zusätzlich in Vertikalrichtung über Führungselemente 43 gehalten sind. Die Führungselemente 43 bestehen aus einem u-förmigen Teil, das an dem Tragrahmen 22 befestigt ist und dessen offene Seite in Förderrichtung F gesehen nach vorne gerichtet ist. In die Öffnung greift eine streifenförmiges Element ein, das an der Weichenschiene 41 befestigt ist. Die Verbindungsstange 40 greift an der Weichenschiene 41 b in der Nähe der Führungselemente 43 und mit Abstand von dem Weichengelenk 42 an.

Desweiteren ist der Figur 4 die entsprechende Ausbildung der Weichenschiene 41a des Weichenelementes 17a zu entnehmen. Auch hier ist die Weichenschiene 41a in seiner Ruhestellung dargestellt und die Betriebsstellung nur andeutungsweise durch das in Förderrichtung F liegende vordere Ende des feststehenden Teils der Weichenschiene 41a' angedeutet. Der Schlitz 36 der Schlitzscheibe 37 des Weichenelements 17a ist hier in seinen beiden möglichen Stellungen gezeigt.

Anhand der Figur 5, die eine Ausschnittsvergrößerung von Figur 4 aus dem Bereich des Weichenelements 17b zeigt, werden nachfolgend die Funktionsweise und die Vorteile des Antriebes 32 der Weichelemente 17 näher erläutert. Die Weichenschiene 41b befindet sich in ihrer angehobenen und horizontalen Ruhestellung, so daß die Führungsrolle 14 der Koppelstangen 12 der Fahrwerke 7 entlang der Führungschiene 15b geführt werden und somit der Kipparm 18 sich in seiner Transportstellung befindet. In dieser Ruhestellung wird die Weichenschiene 41b über die Verbindungsstange 40 gehalten, die hierzu über einen Verbindungswinkel 44 und die Achse 45 mit der Weichenschiene 41b gelenkig verbunden ist und sich an einem Ende an der Schlitzscheibe 37 abstützt, die in ihrer Ruhestellung über aneinander liegenden Anlageflächen 34', 37' der Schlitzscheibe 37 und der Stiftscheibe 34 gehalten wird. Da der Schlitz 36 in der Betriebsstellung und auch der Ruhestellung der Weichenschiene 41b mit seiner Längserstreckung tangential zur Welle 33 ausgerichtet ist, werden nur über die Anlageflächen 34', 37' Kräfte in Richtung der Welle 33 in die Stiftscheibe 34 eingeleitet und somit der Antrieb 32 nicht drehend beansprucht. Dieses Kurvengetriebe wird somit als selbsthemmend bezeichnet.

Die Hebelverhältnisse an der Schlitzscheibe 37 sind in Anpassung mit dem Verstellweg der Weichenschiene 41b so gewählt, daß auch in der Betriebsstellung der Stiftscheibe 34 und der Schlitzscheibe 37 (siehe Figur 4, Weichenelemente 17a) der Schlitz 36 mit seiner Längserstreckung tangential zur Welle 33 ausgerichtet ist und die Anlageflächen 34', 37' aneinander liegen. Durch Verdrehung der Stiftscheibe 34 um 90° ist somit die Weichenschiene 41 aus ihrer Betriebs- in ihre Ruhestellung bzw. umgekehrt verschwenkbar. Die Getriebeverbindung der Weichenschiene 41 über die Stiftscheibe 34 und die Schlitzscheibe 37 hat darüberhinaus noch den Vorteil, daß insbesondere bei als Elektromotor ausgebildeten Antrieb 32 ein geringes Anlaufmoment benötigt wird, da der Stift 35 zu Beginn seiner Bewegung zunächst relativ frei in Richtung der Längserstreckung des Schlitzes 36 bewegt wird und erst mit zunehmender Verschwenkung der Stiftscheibe 34 der Anteil der auf die Seitenwände des Schlitzes 36 zu übertragenden Kräfte ansteigt.

Desweiteren zeigt Figur 5, daß die Verbindungsstange 40 in ihrer Länge verstellbar ist. Hierdurch kann der Übergang zwischen dem Ende der Weichenschiene 41 und dem Anfang der Führungsschiene 15 oder der Kippschiene 16 leicht eingestellt werden.

Desweiteren ist der Figur 6, die eine Draufsicht auf Figur 4 zeigt, zu entnehmen, daß das Weichengelenk 42 als Schaniergelenk ausgebildet ist. Dieses Schaniergelenk weist eine horizontal und quer zur Förderrichtung F ausgerichtete Schwenkachse auf und besteht im wesentlichen aus einem an den Tragrahmen 22 armförmiges Lagerelement, das an seinem dem Tragrahmen 22 abgewandten Ende eine Bohrung für eine Achse aufweist, auf die an dem aus dem Befestigungselement herausragenden Enden ein gabelförmiges Gelenkteil aufgeschoben ist, das über einen Winkel mit der Weichenschiene 41a verbunden ist.

## Patentansprüche

1. Kippvorrichtung zum Entleeren von Behältern (2) für Stückgut, insbesondere für Fluggepäckstücke, die im Verlauf einer Förderbahn (3) angeordnet ist und an die mindestens ein Abzweigförderer angrenzt, mit in Förderrichtung (F) hintereinander angeordneten Kipparmen (8), die zur Entleerung des Stückgutes aus dem Behälter (2) auf den Abzweigförderer jeweils um eine in Förderrichtung (F) und weitestgehend horizontal verlaufende Achse (9) seitlich verschwenkbar und die jeweils auf einem Fahrwerk (7) angeordnet sind, wobei die Fahrwerke (7) über ein angetriebenes Zugmittel (4) zu einer endlos umlaufenden Kette verbunden sind und die Behälter (2) zur Aufnahme von und Übergabe an die Förderbahn (3) zur Weiterleitung der Behälter (2) zwischen den Förderbahnen (3) über mindestens zwei Kipparme (8) mit dem in Förderrichtung (F) bewegbaren Fahrwerken (7) koppel- und entkoppelbar sind, sowie die Behälter (2) im gekoppelten Zustand auf den bewegbaren Kipparmen (8) ruhen,
**dadurch gekennzeichnet**,
daß an den Kipparmen (8) angeordnete Haltemittel (20) als Permanentmagnete ausgebildet sind, und der Behälter (2) zumindest im Bereich seiner Aufstandsfläche magnetisch ausgebildet ist.

2. Kippvorrichtung nach Anspruch 1,
**dadurch gekennzeichnet**,
daß das Zugmittel (4) über zwei Umlenkräder (5) geführt ist, die jeweils im Bereich des Übergangs zwischen der zu- und der weiterführenden Förderbahn (3) angeordnet und um horizontale Achsen drehbar sind, so dass die Haltemittel (20) bei der Aufnahme oder Übergabe der Behälter (2) sich zum Koppeln oder Entkoppeln im wesentlichen von unten an die bzw. nach unten von der Aufstandsfläche des Behälters (2) hin bzw. weg bewegen.

3. Kippvorrichtung nach Anspruch 1 oder 2,
**dadurch gekennzeichnet**,
daß die Haltemittel (20) scheibenförmig ausgebildet, mit einer Scheibenfläche dem anzukoppelnden Behälter (2) zugewandt und begrenzt winkelbeweglich an dem Kipparm (8) gelagert sind.

4. Kippvorrichtung nach einem der Ansprüche 1 bis 3,
**dadurch gekennzeichnet**,
daß die Haltemittel (20) an den seitlichen Enden der Kipparme (9) angeordnet sind.

5. Kippvorrichtung nach einem der Ansprüche 1 bis 4,
**dadurch gekennzeichnet**.
daß auf jedem Fahrwerk (7) ausschließlich ein Kipparm (8) angeordnet ist und der Abstand zwischen zwei Kipparmen (8) in Förderrichtung (F) gesehen so auf die Länge der Behälter (2) abgestimmt ist, daß ein Behälter (2) von zwei Kipparmen (8) tragbar ist.

6. Kippvorrichtung nach einem der Ansprüche 2 bis 5,
**dadurch gekennzeichnet**,
daß die Fahrwerke (7) Laufrollen (11) aufweisen, die auf quer zur Förderrichtung (F) gesehen stadionförmig verlaufenden Fahrschienen (6) ablaufen, und die Umlenkräder (5) im Bereich der Enden der Fahrschienen (6) angeordnet sind.

7. Kippvorrichtung nach einem der Ansprüche 1 bis 6,
**dadurch gekennzeichnet**,
daß für die Kippbewegung der Behälter (2) an jedem Kipparm (8) außerhalb seiner Achse (9) gelenkig eine Koppelstange (12) angreift, die im wesentlichen vertikal ausgerichtet ist und an ihrem dem Kipparm (8) abgewandten Ende eine Führungsrolle (14) gelagert ist, die für ein Halten der Kipparme (8) in ihrer horizontalen Transportstellung in einer parallel zur Fahrschiene (6) verlaufenden Führungsschiene (15) geführt ist und für ein Verschwenken der Kipparme (8) um die Achse (9) über ein schaltbares Weichenelement (17) die Führungsrolle (14) in eine vertikal zur Führungsschiene (15) versetzt angeordnete Kippschiene (16) umleitbar ist.

8. Kippvorrichtung nach Anspruch 7,
**dadurch gekennzeichnet**,
daß die Weichenelemente (17) aus einer Weichenschiene (41) bestehen, die in ihrer horizontalen Ruhestellung im Verlauf der Führungsschiene (15) angeordnet ist und über einen Antrieb (32) in eine verschwenkte und die Führungsschiene (15) mit der zugeordneten Kippschiene (16) verbindende Betriebsstellung verschwenkbar ist.

9. Kippvorrichtung nach Anspruch 8,
**dadurch gekennzeichnet**,
daß für die Schwenkbewegung der Weichenschiene (41) über den Antrieb (32) ein Kurvengetriebe nach Art eines Malteserkreuzes vorgesehen ist, das eine quer zur Förderrichtung (F) ausgerichtete, antreibbare Stiftscheibe (34) aufweist, die über einen Stift (35) in einen in einer Schlitzscheibe (37) angeordneten Schlitz (36) eingreift, wobei an der Schlitzscheibe (37) eine Verbindungsstange (40) gelagert ist, die die Drehbewegung der Schlitzscheibe (37) in eine Hub- oder Senkbewegung der Weichenschiene (41) umsetzt.

10. Kippvorrichtung nach Anspruch 9,
**dadurch gekennzeichnet**,
daß der Schlitz (36) mit seiner gedachten Verlängerung seiner Längserstreckung die Welle (38) der Schlitzscheibe (37) schneidet, die Stiftscheibe (34) für eine Verschwenkung der Weichenschiene (41) aus ihrer Ruhestellung in ihre Betriebsstellung um etwa 90° schwenkbar ist und jeweils in der Betriebs- und in der Ruhestellung der Schlitz (36) mit seiner Längserstreckung tangential zur Welle (33) der Stiftscheibe (34) ausgerichtet ist, sowie an der Stiftscheibe (34) und der Schlitzscheibe (37) angeordnete Anlageflächen (34', 37') zur Selbsthemmung des Kurvengetriebes aneinanderliegen.

11. Kippvorrichtung nach einem der Ansprüche 7 bis 10,
**dadurch gekennzeichnet**,
daß in Förderrichtung (F) gesehen auf der rechten und linken Seite der Kippvorrichtung (1) jeweils eine Führungsschiene (15), eine Kippschiene (16) und ein Weichenelement (17) vorgesehen sind und die Koppelstangen (12) jeweils abwechselnd an den beiden Seiten der Kipparme (8) angreifen, so daß die Führungsrollen (14) der aufeinanderfolgenden Fahrwerke (7) jeweils abwechselnd in die rechten und linken Führungsschienen (15) und Kippschienen (16) eingreifen.

## Claims

1. Tipping device for emptying containers (2) for articles, in particular for flight baggage, which is disposed in the path of a conveyor (3) and which is abutted by at least one branch conveyor, having tipping arms (8) disposed consecutively in the conveying direction (F), which in order to empty articles from the container (2) on to the branch conveyor, are each laterally tiltable about an axis (9) extending in the conveying direction (F) and substantially horizontally and are disposed on a respective travelling mechanism (7), the travelling mechanisms (7) being connected via a driven traction mechanism (4) to a continuously revolving chain and the containers (2), in order to receive and transfer to the conveyor (3) for further transport the containers (2) between conveyors (3) being engageable to and disengageable from the travelling mechanisms (7) movable in the conveying direction (F), via at least two tipping arms (8), and the containers (2) in the engaged state resting on the movable tipping arms (8), **characterised in that** holding means (20) disposed on the tipping arms (8) are formed as permanent magnets, and the container (2) is magnetic at least in the region of its standing face.

2. Tipping device according to claim 1, **characterised in that** the traction means (4) is passed over two deflection pulleys (5), each of which is disposed in the region of the transition between the supplying and discharging conveyor (3) and is rotatable about horizontal axes, so that the holding means (20), during receiving or transfer of containers (2), in order to engage or disengage, move substantially from below towards or downwards away from the standing face of the container (2).

3. Tipping device according to claim 1 or 2, **characterised in that** the holding means (20) are disc-shaped, with a disc face associated with the container (2) to be coupled and are mounted with limited angular motion on the tipping arm (8).

4. Tipping device according to one of claims 1 to 3, **characterised in that** the holding means (20) are disposed on the lateral ends of the tipping arms (9).

5. Tipping device according to one of claims 1 to 4, **characterised in that** on each travelling mechanism (7) only one tipping arm (8) is disposed and the distance between two tipping arms (8) viewed in the conveying direction (F) is so matched to the length of the container (2) that one container (2) may be carried by two tipping arms (8).

6. Tipping device according to one of claims 2 to 5, **characterised in that** the travelling mechanisms (7) have rollers (11), which run on travel rails (6) extending like a stage viewed transverse to the conveying direction (F), and the deflection wheels (5) are disposed in the region of the ends of the travel rails (6).

7. Tipping device according to one of claims 1 to 6, **characterised in that** for the tipping motion of the containers (2), a coupling rod (12) acts on each tipping arm (8) pivotably out of its axis (9) and is aligned substantially vertically and a guide pulley (14) is mounted at its end remote from the tipping arm (8), which is guided in guide rail (15) extending parallel to the travel rail (6) in order to hold the tipping arms (8) in their horizontal transport position, and in order to tilt the tipping arms (8) about the axis (9) via a switchable points element (17), the guide pulley (14) is divertable into a tipping rail (16) disposed vertically offset from the guide rail (15).

8. Tipping device according to claim 7, **characterised in that** the points elements (17) consist of a points rail (41), which is disposed in its horizontal rest position in the path of the guide rail (15) and is capable of being tilted via a drive (32) into a tilted operating position connecting the guide rail (15) to the associated tilting rail (16).

9. Tipping device according to claim 8, **characterised in that** for the pivoting motion of the points rail (41) via the drive (32), a cam mechanism in the form of a Maltese cross is provided, which has a drivable pin disc (34) which is aligned transverse to the conveying direction (F) and which engages via a pin (35) in a slot (36) disposed in a slotted disc (37), a connecting rod (40) being mounted on the slotted disc (37) and converting the rotary motion of the slotted disc (37) into a lifting or lowering motion of the points rail (41).

10. Tipping device according to claim 9, **characterised in that** the slot (36) with its hypothetical extension in the longitudinal direction intersects with the shaft (38) of the slotted disc (37), the pin disc (34) is pivotable in order to tilt the points rail (41) through about 90° out of its rest position into its operation position, and respectively in the operating and in the rest position the slot (36) is aligned with its longitudinal extent tangential to the shaft (33) of the pin disc (34), and contact faces (34', 37') disposed on the pin disc (34) and the slotted disc (37) abut one another for self-locking of the cam mechanism.

11. Tipping device according to one of claims 7 to 10, **characterised in that** viewed in the conveying direction (F), on the right- and left-hand side of the tipping device (1), a respective guide rail (15), a tipping rail (16) and a points element (17) are provided, and the coupling rods (12) act alternatingly on either side of the tipping arms (8), so that the guide pulleys (14) of the consecutive travelling mechanisms (7) respectively engage alternatingly in the right- and left-hand guide rails (15) and tipping rails (16).

## Revendications

1. Dispositif basculant pour vider des conteneurs (2) pour des marchandises de détail, en particulier pour des bagages ou colis aériens, qui est agencé dans le cours d'une voie de transport (3) et auquel est adjacent au moins un transporteur de dérivation, comportant des bras basculants (8) agencés l'un derrière l'autre dans la direction de transport (F), qui peuvent pivoter latéralement pour vider les marchandises de détail du conteneur (2) sur le transporteur de dérivation, à chaque fois, autour d'un axe (9) s'étendant dans la direction de transport (F) et de façon généralement horizontale et qui, à chaque fois, sont agencés sur un chariot (7), les chariots (7) étant reliés, par l'intermédiaire d'un moyen de traction entraîné (4), en une chaîne tournant sans fin et les conteneurs (2) pour la réception de et le transfert sur la voie de transport (3) pour continuer à guider les conteneurs (2) entre les voies de transport (3) par l'intermédiaire d'au moins deux bras basculants (8) pouvant être couplés, et découplés, avec les chariots (7) mobiles dans la direction de transport (F), et les conteneurs (2) reposant, dans l'état couplé, sur les bras basculants mobiles (8),
**caractérisé en ce que** des moyens de maintien (20) agencés sur les bras basculants (8) sont réalisés comme aimants permanents, et le conteneur (2) est réalisé de façon magnétique au moins dans la zone de sa surface de contact.

2. Dispositif basculant selon la revendication 1,
**caractérisé en ce que** le moyen de traction (4) est guidé sur deux roues de renvoi (5) qui, à chaque fois, sont agencées dans la zone de transition entre les voies de transport d'amenée et continuant le transport (3) et peuvent tourner autour d'axes horizontaux, de sorte que les moyens de maintien (20) lors de la réception ou du transfert des conteneurs (2) se déplacent en va-et-vient pour le couplage ou le découplage généralement du bas sur la surface de contact du conteneur (2) ou vers le bas de la surface de contact du conteneur (2).

3. Dispositif basculant selon la revendication 1 ou 2,
**caractérisé en ce que** les moyens de maintien (20), réalisés sous forme de disque, sont montés sur le bras basculant (8) avec une surface de disque en regard du conteneur (2) à coupler et de façon limitée en déplacement angulaire.

4. Dispositif basculant selon une des revendications 1 à 3,
**caractérisé en ce que** les moyens de maintien (20) sont agencés aux extrémités latérales des bras basculants (9).

5. Dispositif basculant selon une des revendications 1 à 4,
**caractérisé en ce que**, sur chaque chariot (7), il est agencé, exclusivement, un bras basculant (8), et la distance entre deux bras basculants (8) dans la direction de transport (F) est accordée à la longueur des conteneurs (2), de sorte qu'un conteneur (2) peut être porté par deux bras basculants (8).

6. Dispositif basculant selon une des revendications 2 à 5,
**caractérisé en ce que** les chariots (7) présentent des galets de roulement (11), qui circulent sur des rails de déplacement (6) s'étendant sous forme de stade transversalement par rapport à la direction de transport (F), et les roues de renvoi (5) sont agencées dans la zone des extrémités des rails de déplacement (6).

7. Dispositif basculant selon une des revendications 1 à 6,
**caractérisé en ce que**, pour le basculement des conteneurs (2), une bielle (12) engage, de façon articulée, chaque bras basculant (8) à l'extérieur de son axe (9), bielle qui est orientée de façon généralement verticale, et, à son extrémité opposée au bras basculant (8), il est monté un galet de guidage (14) qui est guidé, pour maintenir les bras basculants (8) dans leur position de transport horizontale, dans un rail de guidage (15) s'étendant parallèlement au rail de déplacement (6) et, pour un pivotement des bras basculants (8) autour de l'axe (9), par l'intermédiaire d'un élément d'aiguillage commutable (17), le galet de guidage (14) peut être dérivé dans un rail basculant (16) agencé de façon verticalement décalée par rapport au rail de guidage (15).

8. Dispositif basculant selon la revendication 7,
**caractérisé en ce que** les éléments d'aiguillage (17) sont constitués d'un rail d'aiguillage (41), qui est agencé, dans sa position de repos horizontale, dans le cours du rail de guidage (15) et peut pivoter, par l'intermédiaire d'un entraînement (32), dans une position de service pivotée et reliant le rail de guidage (15) au rail basculant associé (16).

9. Dispositif basculant selon la revendication 8,
**caractérisé en ce que**, pour le pivotement du rail d'aiguillage (41) par l'intermédiaire de l'entraînement (32), il est prévu une transmission à came, du type d'une croix de Malte, qui présente un disque à broche (34) pouvant être entraîné, orienté transversalement par rapport à la direction de transport (F), qui s'engage, par l'intermédiaire d'une broche (35), dans une fente (36) agencée dans un disque à fente (37), une barre de liaison (40) étant montée sur le disque à fente (37), qui transforme le mouvement rotatif du disque à fente (37) en un mouvement de levage ou d'abaissement du rail d'aiguillage (41).

10. Dispositif basculant selon la revendication 9,
**caractérisé en ce que** la fente (36) coupe, par son prolongement imaginaire de son extension longitudinale, l'arbre (38) du disque à fente (37), le disque à broche (34) peut pivoter, pour un pivotement du rail d'aiguillage (41), d'environ 90° de sa position de repos dans sa position de service et, à chaque fois, dans la position de service et dans la position de repos, la fente (36) est orientée, par son extension longitudinale, tangentiellement par rapport à l'arbre (33) du disque à broche (34), des surfaces d'appui (34', 37') agencées sur le disque à broche (34) et le disque à fente (37) reposant l'une sur l'autre pour le blocage automatique de la transmission à came.

11. Dispositif basculant selon une des revendications 7 à 10,
**caractérisé en ce que**, dans la direction de transport (F) sur le côté droit et le côté gauche du dispositif basculant (1), sont prévus, à chaque fois, un rail de guidage (15), un rail basculant (16), et un élément d'aiguillage (17), et les bielles (12) engagent, à chaque fois, de façon alternative les deux côtés des bras basculants (8), de sorte que les galets de guidage (14) des chariots successifs (7) s'engagent, à chaque fois, de façon alternative dans les rails basculants (16) et les rails de guidage (15) droits et gauches.
